# EUROPÄISCHE PATENTSCHRIFT

(11) **EP 1 430 618 B1**
(45) Veröffentlichungstag und Bekanntmachung des Hinweises auf die Patenterteilung: **30.03.2005**
(21) Anmeldenummer: 02774393.9
(22) Anmeldetag: 20.09.2002
(51) Int. Cl.: H04B 3/54

(54) **Verfahren zum Betreiben eines Übertragungssystems und Übertragungssystem in einem Energieversorgungsnetz**
Method for operating a transmission system and transmission system in an energy supply network
Procede pour faire fonctionner un systeme de transmission, et systeme de transmission dans un reseau d'alimentation electrique

(30) Priorität: 27.09.2001 DE 10147772
(43) Veröffentlichungstag der Anmeldung: 23.06.2004
(73) Patentinhaber: SIEMENS AKTIENGESELLSCHAFT, 80333 München (DE)
(72) Erfinder: SIEBERT, Harry, 82178 Puchheim (DE); RUHNKE, Helko, 81479 München (DE)
(86) Internationale Anmeldenummer: PCT/DE2002/003536
(87) Internationale Veröffentlichungsnummer: WO 2003/030396

(56) Entgegenhaltungen:
- WO-A-01/11799
- US-A- 4 250 489
- US-A- 5 848 054

## Beschreibung

Neben den drahtgebundenen und drahtlosen Telekommunikationsleitungen werden in zunehmendem Maße die Energieversorgungsleitungen von Energieversorgungsnetzen für die Übertragung von Informationen, insbesondere Informationen des Internet, eingesetzt. Hierbei ist meist zumindest eine zentrale Übertragungseinrichtung - in der Fachwelt als Powerline Modem bezeichnet - vorgesehen, die über die Energieversorgungsleitungen des Energieversorgungsnetzes mit dezentralen Übertragungseinrichtungen verbunden ist, wobei bei einer Internet-Informationsübertragung die zentrale Einrichtung direkt mit dem Internet und die dezentralen Übertragungseinrichtungen mit einem Internet-Endgerät, beispielsweise einem Computer, verbunden ist. Da die Übertragungsreichweite der Übertragungseinrichtungen begrenzt ist, wird bei nicht ausreichender Übertragungsreichweite der zentralen zur dezentralen Übertragungseinrichtungen im Energieversorgungsnetz zumindest eine Repeater-Übertragungseinrichtung, d.h. eine dezentrale Repeaterfunktion, derart im Energieversorgungsnetz positioniert, dass eine Übertragung der Informationen von den zentralen zu den dezentralen Übertragungseinrichtungen und umgekehrt möglich ist. Meist ist die Repeater-Übertragungseinrichtung derart positioniert, dass die Informationsübermittlung auf kürzestem bzw. direktem Weg erfolgt. Um bei Ausfall von derartigen Repeater-Übertragungseinrichtungen eine Informationsübermittlung zu gewährleisten, sind in den Energieversorgungsnetzen redundante Repeater-Übertragungseinrichtungen vorzuhalten, über die die Informationsübermittlung per Netzmanagementfunktion des Übertragungssystems umgesteuert wird. Dies erfordert einen zusätzlichen wirtschaftlichen Aufwand.

In der US 4,250,489 ist ein Energieverteilungsnetz mit einem Kommunikationssystem beschrieben, bei dem im Energieverteilungsnetz Repeater angeordnet sind, die von einer zentralen Steuereinrichtung des Kommunikationssystems in mehrere Repeater-Level gesteuert werden können. Der Repeater-Level wird in Abhängigkeit von der Position des Repeaters im Energieverteilungsnetz eingestellt.

Die der Erfindung zugrundeliegende Aufgabe ist darin zu sehen, den Aufwand für die Redundanz der Repeater-Übertragungseinrichtungen zu verringern. Die Aufgabe wird ausgehend von einem Verfahren zum Betreiben eines Übertragungssystems in einem Energieversorgungsnetz bzw. einem Übertragungssystem gemäss den Merkmalen der Oberbegriffe der Patentansprüche 1 und 7 jeweils durch deren kennzeichnende Merkmale gelöst.

Der wesentliche Aspekt des erfindungsgemäßen Verfahrens bzw. des erfindungsgemäßen Übertragungsssytems ist darin zu sehen, dass zumindest ein Teil der dezentralen Übertragungseinrichtungen zusätzlich mit Repeaterfunktionen derart ausgestaltet sind, dass sie von der dezentralen Übertragungseinrichtung als dezentrale Übertragungseinrichtung und/oder als Repeater-Übertragungseinrichtung konfigurierbar sind. Der wesentliche Vorteil der Integration der Repeater-Übertragungseinrichtung bzw. der Repeaterfunktion in die dezentralen Übertragungseinrichtungen ist darin zu sehen, dass ein Großteil der in den dezentralen Übertragungseinrichtungen vorhandenen Komponenten wie Ankoppelungs- und Übertragungstechnik für die Realisierung der Repeaterfunktion mitbenutzt werden kann und somit eine erhebliche Reduzierung des wirtschaftlichen Aufwandes für die Repeaterfunktion erreicht wird. Lediglich die Protokollrechner der dezentralen Übertragungseinrichtungen sind mit einer allgemeinen Protokollplattform auszustatten, mit denen sowohl die Funktionen der dezentralen Übertragungseinrichtung als auch die Funktionen der Repeaterfunktion realisiert werden, wobei aufgrund der steigenden Leistungen der Prozessoren bzw. Rechner und der Speicher bei gleichzeitiger Kostenreduzierung eine wirtschaftliche Realisierung der Protokollplattform erreicht wird. Ein weiterer Vorteil des erfindungsgemäßen Verfahrens ist darin zu sehen, dass die Rekonfiguration automatisch ohne Mithilfe von Wartungspersonal gesteuert wird, wobei die Informationsübermittlung der nicht von der Rekonfiguration betroffenen Übertragungseinrichtungen nicht gestört wird.

Weitere vorteilhafte Ausgestaltungen des erfindungsgemäßen Verfahrens und der erfindungsgemäßen dezentralen Übertragungseinrichtung sind den weiteren Ansprüchen zu entnehmen.

Im folgenden wird das erfindungsgemäße Verfahren bzw. die erfindungsgemäße dezentrale Übertragungseinrichtung anhand zweier zeichnerischen Darstellungen näher erläutert. Dabei zeigen
- Fig.1: in einem Blockschaltbild schematisch ein Übertragungssystem in einem Energieversorgungsnetz und
- Fig.2: in einem Blockschaltbild schematisch das nach Fig.1 ausgestaltete und rekonfigurierte Übertragungssystem nach einem Teilausfall des Energieversorgungsnetzes.

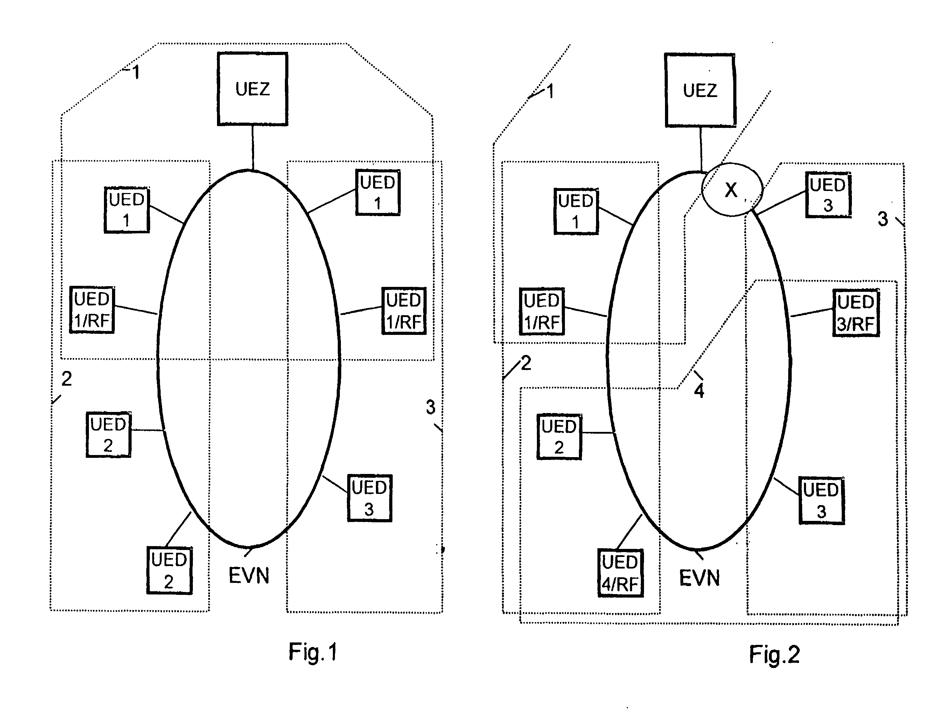

Fig.1 und Fig.2 zeigen je ein Energieversorgungsnetz EVN - durch eine ovale Linie angedeutet -, an deren Energieversorgungsleitungen - nicht dargestellt - mehrere Übertragungseinrichtungen UE angeschlossen sind, die zusammen ein Übertragungssystem für die Übermittlung von Informationen über ein Energieversorgungsnetz EN bilden. Für das Ausführungsbeispiel sei angenommen, dass eine zentrale Übertragungseinrichtung UEZ und die verbleibenden Übertragungseinrichtungen UE als dezentrale Übertragungseinrichtungen UED an das Energieversorgungsnetz EVN angeschlossen sind. Ein derartiges Übertragungssystem dient beispielsweise dazu, an die dezentralen Übertragungseinrichtungen UED angeschlossene Personalcomputer über das Energieversorgungsnetz EVN und die zentrale Übertragungseinrichtung UEZ mit dem Internet zu verbinden - nicht dargestellt -, wobei das Einrichten und Auflösen der für den Internet-Informationsaustausch erforderlichen Verbindungen - einschließlich des Ressourcen- und Netzmanagement - durch die zentrale Übertragungseinrichtung UEZ koordiniert wird.

Die dezentralen Übertragungseinrichtungen UED sind erfindungsgemäß als dezentrale Übertragungseinrichtungen UED mit und ohne Repeaterfunktion RF konfigurierbar, d.h. die dezentralen Übertragungseinrichtungen UED können durch eine Netzmanagementfunktion, die innerhalb oder außerhalb des Übertragungssystems realisiert ist, entsprechend den geographischen Verhältnissen des Energieversorgungsnetzes EVN und den Übertragungsreichweiten der Übertragungseinrichtungen UE hinsichtlich ihrer Eigenschaften ferneingestellt werden, wobei die Übertragungsreichweiten im wesentlichen durch die verwendeten Übertragungsverfahren und die Ausbreitungsbedingungen bestimmt werden.

Beim Ausführungsbeispiel sind in dem Reichweitenbereich 1 der zentralen Übertragungseinrichtung UEZ zwei Übertragungseinrichtungen UED1 ohne Repeaterfunktion RF und an den Grenzen des Reichweitenbereichs 1 jeweils zwei Übertragungseinrichtungen UED1/RF mit Repeaterfunktion RF konfiguriert. Jeder der Übertragungseinrichtungen UED1/RF mit Repeaterfunktion RF ist jeweils ein Reichweitenbereich 2,3 - durch punktierte Linien angedeutet - zugeordnet. In diesen Reichweitenbereichen 2,3 sind weitere Übertragungseinrichtungen UED2, UED3 an das Energieversorgungsnetz EVN angeschlossen, wobei diese Übertragungseinrichtungen UED2,UED3 außerhalb des Reichweitenbereichs 1 der zentralen Übertragungseinrichtung UEZ angeordnet sind. Mit Hilfe der Repeaterfunktion RF in den dezentralen Übertragungseinrichtungen UED/RF können weiter entfernte dezentrale Übertragungseinrichtungen UED, die ansonsten nicht mehr mit der zentralen Übertragungseinrichtung UEZ kommunizieren können, mit der zentralen Übertragungseinrichtung UEZ verbunden werden, wobei die Repeaterfunktion RF im wesentlichen den Empfang der relevanten Übertragungssignale und das Wiederaussenden der Übertragungssignale realisiert. Durch das Wiederaussenden wird ein weiterer Reichweitenbereich 2,3 gebildet, über den weiter entfernte dezentrale Übertragungseinrichtungen UED erreicht und mit der zentralen Übertragungseinrichtung UEZ im Sinne eines Datenaustausches beispielsweise für Internetverbindungen kommunizieren können. Dies bedeutet, dass die Pfade für den Informationsaustausch zwischen der zentralen und den dezentralen Übertragungseinrichtungen UEZ,UED festgelegt sind und diese Pfade einschließlich der Konfiguration der Übertragungseinrichtungen UE mit oder ohne Repeaterfunktion RF definiert und in der zentralen Übertragungseinrichtung UEZ als Topologie des Übertragungssystems gespeichert sind. Hierzu gehören auch die Reichweitenbereiche 1..3 der jeweiligen Übertragungseinrichtungen UED/RF, die durch die Übertragungsreichweite der jeweiligen Übertragungseinrichtungen UE gegeben ist.

Mit der zunehmenden Verfügbarkeit preiswerter Komponenten der Übertragungseinrichtungen UE wie preiswerte Speicher oder Rechner - kann basierend auf vorhandenen Komponenten wie Gehäuse, Netzteil und Leiterplatten und insbesondere vorhandener Ankoppelungstechnik und Übertragungstechnik die Repeater funktion RF besonders wirtschaftlich zusätzlich in die Übertragungseinrichtungen UE integriert werden. Lediglich eine programmtechnische Plattform für die verschiedenen Protokolle, die für die dezentrale Funktion der Übertragungseinrichtungen UEZ und für die Repeaterfunktion RF erforderlich, ist zusätzlich zu realisieren, wobei die programmtechnische Realisierung besonders wirtschaftlich erfolgen kann. Die Aktivierung bzw. Konfigurierung der Repeaterfunktion RF in den dezentralen Übertragungseinrichtungen UED wird durch eine Netzmanagementfunktion gesteuert, die in der zentralen Übertragungseinrichtung UEZ oder in übergeordneten, mit der zentralen Übertragungseinrichtung UEZ verbundenen Netzmanagementzentralen - nicht dargestellt - realisiert ist.

Wird durch beispielsweise eine temporäre oder ständige Überwachung des Übertragungssystems oder durch eine Mitteilung eines das Übertragungssystem nutzenden Teilnehmers festgestellt, dass eine dezentrale Übertragungseinrichtung UED nicht mehr erreichbar ist, so wird in der zentralen Übertragungseinrichtung UEZ oder in einem übergeordneten Netzmanagementsystem - nicht dargestellt - anhand der dort gespeicherten Topologiedaten des Übertragungssystems ein alternativer Pfad ermittelt und die dezentralen Übertragungseinrichtungen UED werden hinsichtlich ihrer Repeaterfunktion RF derart konfiguriert, dass die nicht erreichbare Übertragungseinrichtung UE wieder erreicht werden kann. Hierbei ist zu beachten, dass die ursprüngliche Konfiguration des Übertragungssystems bereits derart konfiguriert ist, dass ein alternativer Pfad möglich ist. Beim Ausführungsbeispiel sei angenommen, dass an der in Fig.2 mit X gekennzeichneten Stelle eine Unterbrechung der Übertragung zwischen der zentralen Übertragungseinrichtung UEZ und einer der dezentralen Übertragungseinrichtungen UED 1 auftritt bzw. gemeldet wird und die dezentrale Übertragungseinrichtung UED1 nicht mehr von der zentralen Übertragungseinrichtung UEZ erreicht werden kann.

In der zentralen Übertragungseinrichtung UEZ oder durch die Netzmanagementfunktion wird ein alternativer Pfad von der dezentralen zu der nicht mehr erreichbaren, dezentralen Übertragungseinrichtung UED1 ermittelt. Der neu ermittelte Pfad führt von der zentralen Übertragungseinrichtung UEZ über dessen aufgrund der Störung im Energieversorgungsnetz eingeschränkten Reichweitenbereich 1 zu der dezentralen Übertragungseinrichtung UED1/RF mit dem zugeordneten Reichweitenbereich 2 und zu der dezentralen Übertragungseinrichtung UED2, die an der Grenze deren Reichweitenbereichs 2 angeordnet ist. Diese bisher ohne Repeaterfunktion RF konfigurierte Übertragungseinrichtung UED2 ist beim neu ermittelten Pfad mit einer Repeaterfunktion RF auszustatten, wodurch diese einen Reichweitenbereich 4 aufweist, mit dem die dezentrale Übertragungseinrichtung UED1/RF mit dem Reichweitenbereich 3 erreicht wird. Da die nicht erreichbare Übertragungseinrichtung UED1 in dem Reichweitenbereich 3 der Übertragungseinrichtung UED1/RF angeordnet ist, kann diese beim neu ermittelten Pfad über die Übertragungseinrichtung UED1/RF mit dem Reichweitenbereich 3 erreicht werden. Erfindungsgemäß wird mit Hilfe der Netzmanagementfunktion in der zentralen Übertragungseinrichtung UEZ oder in einer übergeordneten Einrichtung - nicht dargestellt - die dezentrale Übertragungseinrichtung UED2 an der Grenze des Reichweitenbereichs 2 mit einer Repeaterfunktion RF mit einem Reichweitenbereich 4 konfiguriert und die dezentrale Übertragungseinrichtung UED1/RF mit dem Reichweitenbereich 3 wird als Übertragungseinrichtung UED3/RF konfiguriert, die nicht mehr von der zentralen Übertragungseinrichtung UEZ sondern von der Übertragungseinrichtung UED4/RF mit dem Reichweitenbereich 4 erreicht wird, wobei die im Reichweitenbereich 3 angeordneten Übertragungseinrichtungen UED3 über die dezentrale Übertragungseinrichtung UED3/RF erreicht werden.

Sowohl das Erkennen der Nichterreichbarkeit von dezentralen Übertragungseinrichtungen UED als auch die gesamte Rekonfiguration des Übertragungssystems einschließlich des Ermitteln von alternativen Pfaden kann automatisch ohne Mithilfe von Wartungspersonal durch eine Netzmanagementfunktion in der zentralen Übertragungseinrichtung UEZ oder einer übergeordneten Einrichtung - beispielsweise einer Netzmanagementzentrale - durchgeführt werden. Ein weiterer Vorteil des erfindungsgemäßen Verfahrens ist darin zu sehen, dass an den an der Rekonfiguration nicht beteiligten Übertragungseinrichtungen UE die Übertragung von Informationen nicht gestört wird, d.h. die Rekonfigurationsmaßnahmen bleiben auf die Übertragungseinrichtungen UE beschränkt, deren Repeaterfunktion RF konfiguriert und deren Zuordnung zu Übertragungseinrichtungen UED mit Repeaterfunktion RF oder zu anderen Reichweitenbereichen 1..4 geändert wird.

Eine vorteilhafte Rekonfiguration von Übertragungseinrichtungen UE kann bei einer strategischen Projektierung der Konfiguration des Übertragungssystems unter Berücksichtigung von Ausfallbereichen erreicht werden. Hierbei können im Übertragungssystem die Übertragungseinrichtungen UE, die mit Repeaterfunktion RF ausgestattet sind und mit Reichweitenbereichen konfiguriert werden können, derart positioniert werden, dass bei einer Nichterreichbarkeit von Übertragungseinrichtungen UE über diese Übertragungseinrichtungen UE mit Repeaterfunktion RF und deren Reichweitenbereiche alternative Pfade zu den nicht erreichbaren Übertragungseinrichtungen UED ermittelt und konfiguriert werden können.

## Patentansprüche

1. Verfahren zum Betreiben eines Übertragungssystems in einem Energieversorgungsnetz (EVN), bei dem zumindest eine zentrale Übertragungseinrichtung (UEZ) über die Energieversorgungsleitungen des Energieversorgungsnetzes (EVN) mit dezentralen Übertragungseinrichtungen (UED) verbunden ist, bei dem bei nicht ausreichender Übertragungsreichweite der zentralen zur dezentralen Übertragungseinrichtungen (UEZ,UED) eine dezentrale Repeaterfunktion (RF) im Energieversorgungsnetz (EVN) entsprechend positioniert ist,
**dadurch gekennzeichnet,**
**dass** zumindest ein Teil der dezentralen Übertragungseinrichtungen (UED) zusätzlich mit Repeaterfunktionen (RF) derart ausgestaltet sind, dass sie mit Hilfe einer in der zentralen Übertragungseinrichtung (UEZ) oder im Energieversorgungsnetz (EVN) und in den dezentralen Übertragungseinrichtungen (UED) realisierten Netzmanagementfunktion als dezentrale Übertragungseinrichtung (UED) oder als dezentrale Übertragungseinrichtung (UED/RF) mit Repeaterfunktion (RF) konfigurierbar sind, wobei die Repeaterfunktion (RF) in den dezentralen Übertragungseinrichtungen (UED) in Abhängigkeit von der Netztopologie des Energieversorgungsnetzes (EVN) und den Übertragungsreichweiten der dezentralen Übertragungseinrichtungen (UED) konfiguriert wird.

2. Verfahren nach Anspruch 1,
**dadurch gekennzeichnet,**
**dass** bei einer Nichterreichbarkeit einer dezentralen Übertragungseinrichtung (UED) die anderen dezentralen Übertragungseinrichtungen (UED) und deren Repeaterfunktion (RF) mit Hilfe der Netzmanagementfunktion und der der Netzmanagementfunktion zugeordneten Netztopologie des Energieversorgungsnetzes (EVN) derart automatisch rekonfiguriert werden, dass eine Kommunikation der zentralen mit den dezentralen Übertragungseinrichtungen (UEZ,UED) möglich ist.

3. Verfahren nach Anspruch 2, **dadurch gekennzeichnet,**
**dass** bei einer Nichterreichbarkeit einer der dezentralen Übertragungseinrichtungen (UED) mit Hilfe der Netzmanagementfunktion ein alternativer Pfad für die Übermittlung der Informationen von der zentralen zur nicht erreichbaren Übertragungseinrichtung (UEZ,UED) ermittelt wird, und
**dass** die betroffenen dezentralen Übertragungseinrichtungen (UED) entsprechend des alternativ ermittelten Pfades mit den erforderlichen Repeaterfunktionen (RF) konfiguriert werden.

4. Verfahren nach einem der vorhergehenden Ansprüche, **dadurch gekennzeichnet,**
**dass** bei einer Initialisierung oder im Rahmen der Erweiterung oder Reduzierung vorgesehenen Rekonfiguration des Übertragungssystems über Energieversorgungsleitungen mit Hilfe der Netzmanagementfunktion und der der Netzmanagementfunktion zugeordneten Netztopologie des Energieversorgungsnetzes (EVN) die dezentralen Übertragungseinrichtungen (UED) und deren Repeaterfunktionen (RF) derart konfiguriert werden, dass eine möglichst kurze Übertragungsstrecke erreicht wird.

5. Verfahren nach einem der vorhergehenden Ansprüche, **dadurch gekennzeichnet,**
**dass** das Übertragungssystem derart konfiguriert ist, dass bei Nichterreichbarkeit von dezentralen Übertragungseinrichtungen (UED) ein Teil der dezentralen Übertragungseinrichtungen (UED/RF) mit Repeaterfunktion (RF) ausgebildet und derart positioniert ist, das alternative Pfade zu den nicht erreichbaren Übertragungseinrichtungen (UED) ermittelt und die betroffenen Übertragungseinrichtungen (UE) hinsichtlich ihrer Repeaterfunktion (RF) und der ihrem Reichweitenbereich (1..4) zugeordneten Übertragungseinrichtungen (UE) konfiguriert werden können.

6. Übertragungssystems in einem Energieversorgungsnetz (EVN), bei dem zumindest eine zentrale Übertragungseinrichtung (UEZ) über die Energieversorgungsleitungen des Energieversorgungsnetzes mit dezentralen Übertragungseinrichtungen (UED) verbunden ist, bei dem bei nicht ausreichender Übertragungsreichweite der zentralen zur dezentralen Übertragungseinrichtungen (UEZ,UED) eine dezentrale Repeaterfunktion (RF) im Energieversorgungsnetz (EVN) entsprechend positioniert ist,
**dadurch gekennzeichnet,**
**dass** zumindest ein Teil der dezentralen Übertragungseinrichtungen (UED) zusätzlich mit Repeaterfunktionen (RF) derart ausgestaltet ist, dass sie mit Hilfe einer im Übertragungssystem oder diesem zugeordneten Netzmanagementfunktion als dezentrale Übertragungseinrichtung (UED) oder als dezentrale Übertragungseinrichtung UED/RF mit Repeaterfunktion (RF) konfigurierbar sind, wobei die Repeaterfunktion (RF) in den dezentralen Übertragungseinrichtungen (UED) in Abhängigkeit von der Netztopologie des Energieversorgungsnetzes (EVN) und den Übertragungsreichweiten der dezentralen Übertragungseinrichtungen (UED) konfiguriert wird.

## Claims

1. Method for operating a transmission system in a power supply network (EVN), wherein at least one centralised transmission facility (UEZ) is connected via the power supply lines of the power supply network (EVN) to decentralised transmission facilities (UED), wherein a decentralised repeater function (RF) is positioned appropriately in the power supply network (EVN) in the event of an inadequate transmission range of the centralised transmission facilities to the decentralised transmission facilities (UEZ, UED),
**characterised in that**
at least some of the decentralised transmission facilities (UED) are additionally provided with repeater functions (RF) in such a way that they can be configured as a decentralised transmission facility (UED) or as a decentralised transmission facility (UED/RF) with repeater function (RF) with the aid of a network management function implemented in the centralised transmission facility (UEZ) or in the power supply network (EVN) and in the decentralised transmission facilities (UED), whereby the repeater function (RF) is configured in the decentralised transmission facilities (UED) as a function of the network topology of the power supply network (EVN) and the transmission ranges of the decentralised transmission facilities (UED).

2. Method according to Claim 1,
**characterised in that**
in the event of a decentralised transmission facility (UED) being unreachable, the other decentralised transmission facilities (UED) and their repeater function (RF) are automatically reconfigured with the aid of the network management function and the network topology of the power supply network (EVN) assigned to the network management function in such a way that communication between the centralised and decentralised transmission facilities (UEZ, UED) is possible.

3. Method according to Claim 2, **characterised in that**
if one of the decentralised transmission facilities (UED) is unreachable an alternative path for the communication of information from the centralised to the unreachable transmission facility (UEZ, UED) is determined with the aid of the network management function and that the affected decentralised transmission facilities (UED) are configured with the necessary repeater functions (RF) appropriate to the alternative determined path.

4. Method according to one of the preceding claims, **characterised in that**
during an initialisation or a reconfiguration planned as part of the expansion or reduction of the transmission system via power supply lines, the decentralised transmission facilities (UED) and their repeater functions (RF) are configured with the aid of the network management function and of the network topology of the power supply network (EVN) assigned to the network management function in such a way that the shortest possible transmission path is achieved.

5. Method according to one of the preceding claims, **characterised in that**
the transmission system is configured in such a way that if decentralised transmission facilities (UED) cannot be reached, some of the decentralised transmission facilities (UED/RF) with repeater function (RF) are embodied and positioned in such a way that alternative paths to the unreachable transmission facilities (UED) are determined and the relevant transmission facilities (UE) can be configured with regard to their repeater functions (RF) and the transmission facilities (UE) assigned to their range area (1..4).

6. Transmission system in a power supply network (EVN), wherein at least one centralised transmission facility (UEZ) is connected via the power supply lines of the power supply network to decentralised transmission facilities (UED), with a decentralised repeater function (RF) being appropriately positioned in the power supply network (EVN) in the event of there being insufficient transmission range of the centralised to the decentralised transmission facilities (UEZ, UED),
**characterised in that**
at least some of the decentralised transmission facilities (UED) are additionally provided with repeater functions (RF) in such a way that they are configurable as a decentralised transmission facility (UED) or as a decentralised transmission facility (UED/RF) with repeater function (RF) with the aid of a network management function in the transmission system or assigned to said transmission system, whereby the repeater function (RF) is configured in the decentralised transmission facilities (UED) as a function of the network topology of the power supply network (EVN) and the transmission ranges of the decentralised transmission facilities (UED).

## Revendications

1. Procédé pour faire fonctionner un système de transmission dans un réseau d'alimentation électrique (EVN) dans lequel au moins un dispositif de transmission central (UEZ) est connecté à des dispositifs de transmission décentralisés (UED) par l'intermédiaire des lignes d'alimentation électrique du réseau d'alimentation électrique (EVN), dans lequel, en cas de portée de transmission insuffisante du dispositif de transmission central vers le dispositif de transmission décentralisé (UEZ, UED), une fonction répétiteur décentralisée (RF) est positionnée de manière appropriée dans le réseau d'alimentation électrique (EVN),
**caractérisé en ce que**
au moins une partie des dispositifs de transmission décentralisés (UED) sont en outre réalisés avec des fonctions répétiteurs (RF) de manière telle qu'ils sont configurables, à l'aide d'une fonction de gestion de réseau réalisée dans le dispositif de transmission central (UEZ) ou dans le réseau d'alimentation électrique (EVN) et dans les dispositifs de transmission décentralisés (UED), en tant que dispositif de transmission décentralisé (UED) ou en tant que dispositif de transmission décentralisé (UED/RF) avec fonction répétiteur (RF), la fonction répétiteur (RF) étant configurée dans les dispositifs de transmission décentralisés (UED) en fonction de la topologie de réseau du réseau d'alimentation électrique (EVN) et des portées de transmission des dispositifs de transmission décentralisés (UED).

2. Procédé selon la revendication 1,
**caractérisé en ce que**,
en cas d'inaccessibilité d'un dispositif de transmission décentralisé (UED), les autres dispositifs de transmission décentralisés (UED) et leur fonction répétiteur (RF) sont reconfigurés automatiquement à l'aide de la fonction de gestion de réseau et de la topologie de réseau du réseau d'alimentation électrique (EVN) affectée à la fonction de gestion de réseau de manière telle qu'une communication est possible entre le dispositif de transmission central et les dispositifs de transmission décentralisés (UEZ, UED).

3. Procédé selon la revendication 2, **caractérisé en ce que**,
en cas d'inaccessibilité de l'un des dispositifs de transmission décentralisés (UED), un chemin alternatif pour la transmission des informations du dispositif de transmission central vers le dispositif de transmission inaccessible (UEZ, UED) est déterminé à l'aide de la fonction de gestion de réseau et **en ce que** les dispositifs de transmission décentralisés concernés (UED) sont configurés selon le chemin déterminé alternativement avec les fonctions répétiteurs nécessaires (RF).

4. Procédé selon l'une des revendications précédentes, **caractérisé en ce que**,
dans le cas d'une initialisation ou dans le cadre de l'élargissement ou de la réduction de la reconfiguration prévue du système de transmission, les dispositifs de transmission décentralisés (UED) et leurs fonctions répétiteurs (RF) sont configurés à l'aide de la fonction de gestion de réseau et de la topologie de réseau du réseau d'alimentation électrique (EVN) affectée à la fonction de gestion de réseau par l'intermédiaire de lignes d'alimentation électrique de manière telle qu'on obtient une distance de transmission aussi courte que possible.

5. Procédé selon l'une des revendications précédentes, **caractérisé en ce que**
le système de transmission est configuré de manière telle que, en cas d'inaccessibilité de dispositifs de transmission décentralisés (UED), une partie des dispositifs de transmission décentralisés (UED/RF) avec fonction répétiteur (RF) est réalisée et positionnée de manière telle que des chemins alternatifs vers les dispositifs de transmission inaccessibles (UED) sont déterminés et les dispositifs de transmission (UE) concernés peuvent être configurés pour ce qui est de leur fonction répétiteur (RF) et des dispositifs de transmission (UE) affectés à leur zone de portée (1 ... 4).

6. Système de transmission dans un réseau d'alimentation électrique (EVN), dans lequel au moins un dispositif de transmission central (UEZ) est connecté à des dispositifs de transmission décentralisés (UED) par l'intermédiaire des lignes d'alimentation électriques du réseau d'alimentation électrique, dans lequel, en cas de portée de transmission insuffisante du dispositif de transmission central vers le dispositif de transmission décentralisé (UEZ, UED), une fonction répétiteur décentralisée (RF) est positionnée de manière appropriée dans le réseau d'alimentation électrique (EVN),
**caractérisé en ce que**
au moins une partie des dispositifs de transmission décentralisés (UED) sont en outre réalisés avec des fonctions répétiteurs (RF) de manière telle qu'ils sont configurables, à l'aide d'une fonction de gestion de réseau affectée dans le système de transmission ou à celui-ci, en tant que dispositif de transmission décentralisé (UED) ou en tant que dispositif de transmission décentralisé (UED/RF) avec fonction répétiteur (RF), la fonction répétiteur (RF) étant configurée dans les dispositifs de transmission décentralisés (UED) en fonction de la topologie de réseau du réseau d'alimentation électrique (EVN) et des portées de transmission des dispositifs de transmission décentralisés (UED).
